Europäisches Patentamt

European Patent Office

Office européen des brevets

(11) Publication number: **0 096 767**
A2

# EUROPEAN PATENT APPLICATION

(21) Application number: 83105087.7

(22) Date of filing: 22.05.83

(51) Int. Cl.³: **B 65 G 47/51,** B 65 G 47/26

(30) Priority: 18.06.82 IT 2192982

(71) Applicant: **Dott. Bonapace & C. S.p.A., Via Canova, 12, I-20145 Milano (IT)**

(43) Date of publication of application: 28.12.83
**Bulletin 83/52**

(72) Inventor: **Brighi, Franco, Via dello Scalo 5/b, I-40100 Bologna (IT)**

(84) Designated Contracting States: **AT BE CH DE FR GB IT LI LU NL SE**

(74) Representative: **Riccardi, Sergio, Riccardi & Co. Via Macedonio Melloni, 32, I-20129 Milano (IT)**

(54) Linear compensation accumulator for containers such as phials, cans, bottles and the like.

(57) The invention discloses a device allowing to compensate shutdown of a machine being part of a packaging line of bottled or canned products, by accumulating a considerable amount of containers in a stand-by serpentine course, so that the other machines of the packaging line upstream said accumulation course may go on with their normal operation.

- 1 -

"LINEAR COMPENSATION ACCUMULATOR FOR CONTAINERS SUCH AS PHIALS,
CANS, BOTTLES AND THE LIKE"

The present invention relates to a device which allows to accumulate in a stand-by or storage course, inserted in a critical point of a packaging line, such as amount of containers, that the machines of the line, being upstream the device, may operate continuously even in case of shutdown of a machine downstream the device.

The problem arising from the accumulation of containers, when shutdown of one or more machines of a packaging line occur, is a very serious one, especially for the containers having a non-cylindrical shape which cannot be placed on stand-by on the conventional rotary tables or carrousels, so that on the packaging lines one has to keep at disposal special gangs of operators taking action in these emergency cases in order to remove with the utmost quickness and in a dangerous condition, the mass of containers which in the meantime bump into each other, break or are battered if they are made of a yielding material. Mess, damage and other inconveniences occurring in these cases are huge and constitute a big problem, severely affecting productivity of the packaging line.

These unsolved problems especially arising from the containers of non-cylindrical shape, are mainly due to the fact the in the packaging lines for such containers, in addition to the impossibility of employing the rotary accumulation tables, normal linear belts are used to connect the various equipments of the line.

Such a prior system takes up great room and in spite of this it always obtains a limited accumulation, causes a high thrust of the containers pressing upon each other, so as to impair operation of the machines in the feeding section of the line, produce easy breaking or deformation of the containers, and jeopardizing the safety of operators because of glass splinters or finger crushing.

The object of the present invention is to solve entirely this problem, employing room in a rational way, obtaining the greatest possible accumulation of containers, so as to allow a considerable increase of line productivity, making up for a shutdown of limited time (generally up to 100-120 seconds) just by the possibility of accumulating a considerable store of containers which are distributed along the accumulation course, eliminating at the same time one of the main grounds of breaking or deformation of the containers as well as any source of danger for the operators of the packaging line.

According to the present invention, the problem is solved by an accumulator carrying the containers with a mechanical system limiting the friction load. This is obtained through a roller chain running in a closed serpentine loop and giving a very big linear length in a very reduced room, so as to accomodate such an amount of containers as to constitute an accumulation store, compensating any possible shutdown of the packaging line, due to the usual production troubles.

On the chain brackets are fixed, supporting transversal pins, on which idle rollers are running. The containers are carried on said rollers and when a trouble occurs downstearn the line, obliging to shutdown it and therefore causing the containers to accumulate, the chain goes on running, but all the load is released on the idle run of said rollers.

The chain links are vertically arranged, so that they can follow the most tortuous path, making very sharp bends allowing to make a serpentine course with a maximum use of the available room.

As in the packaging lines the machines which are most subject to shutdown, even if they are of short duration, are the last ones of the line, such as labelling, boxing or canning machines, the accumulator of the invention is generally placed ahead said machines in the packaging line, but it is clear that it may be inserted in any point where its function is required, and such a position will generally be upstream the machine which is most subject to shutdown. From tests carried out, it was already possible to show that the productivity of the packaging line is increased approximately by 15 to 20% when adopting the accumulator of the present invention, allowing at the same time a total release or elimination of operators and special gangs on the line.

The objects, advantages and features of the accumulator according to the present invention will become more apparent from the following detailed description of a preferred embodiment, given as a non limiting example only, and made with reference to the accompanying sheets of illustrative drawings, in which:

Fig. 1 is a general simplified and diagrammatic plan view of the accumulator according to the present invention;

Fig. 2 is a diagrammatic elevational view of the chain control system with speed regulation;

Fig. 3 is a diagrammatic top view of a first embodiment of a chain rollers;

Fig. 4 is a diagrammatic top view of a second embodiment of chain rollers; and

Fig. 5 a diagrammatic elevational view of a chain link with relevant rollers, made according to the embodiment shown in Fig. 4.

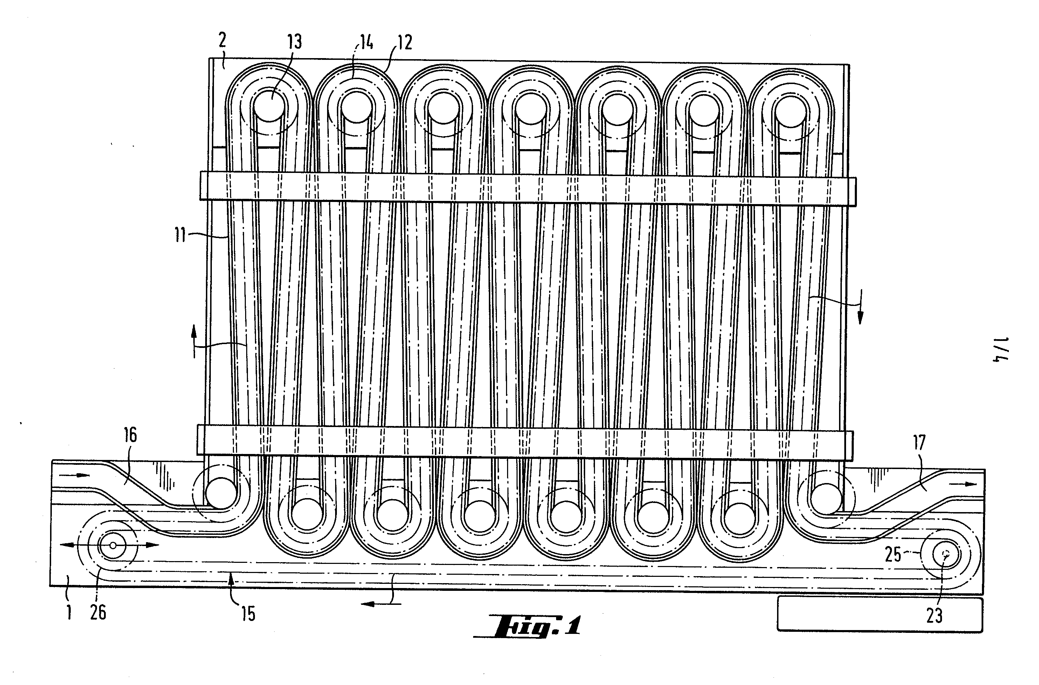

With reference now to the accompanying drawings, and first to the general view of Fig.1, the accumulator of the present invention is inserted, as already indicated, at the most appropriate point of the packaging line, that is to say upstream the machine which is mostly subject to shutdown and generally downstream the container filling machines.

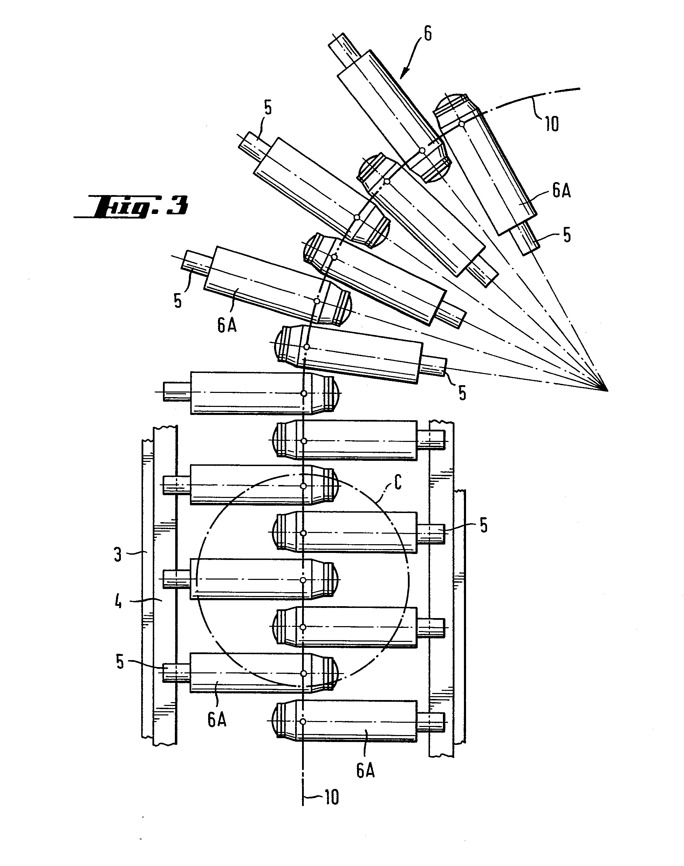

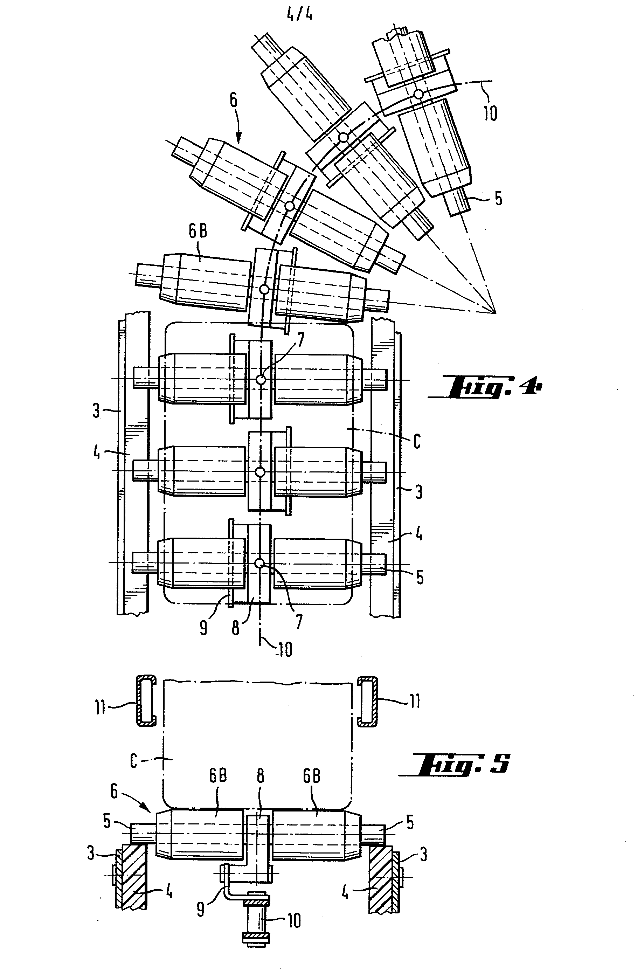

The accumulator is assembled on a frame having the general form of a table mounted on legs, and more particularly in Fig. 1 it is possible to see the front longitudinal beam 1 and the rear longitudinal beam 2. On such a table the serpentine course is defined by straight bars 3 and semicircular bars, internally provided with support bands 4 of a material having a very low friction factor, on which transversal pins 5 are sliding, made of stainless steel or other high strength material, idle rollers 6 of plastic material having a suitable strength being mounted on said pins 5 and supporting the bottom of the containers C. The transversal pins 5 are fixed, e.g. by an elastic peg 7, to blocks 8 which are in turn mounted on brackets 9 applied with alternate orientation on the links 10 of the motion chain (Fig. 5).

The containers C are held and guided at the upper part of their body by guide bars or rails 11 in the straight lengths of the serpentine course, while in the semicircular portions they are guided by bands 12 preferably made of the same material, by which the support bands 4 for the pins 5 of the idle rollers 6 are made.

At the semicircular ends of the straigth lengths of the serpentine accumulation course, the bends are defined by cylindrical columns 13, bearing sprocket wheels 14, while the chain course is completed by the front strainght length 15 connecting the outlet and inlet ends of the serpentine course.

The inlet and outlet ends have a short straight portion which is juxtaposed to the discharge conveyor belt of the machine arranged upstream the line and to the loading conveyor belt of the machine arranged downstream the same line, respectively, the containers being introduced into the accumulation course by an oblique inlet guide 16 and discharged therefrom by a similar oblique outlet guide 17.

The chain motorization assembly is arranged at the outlet end of the accumulator, so as to carry out a movement of the containers by traction in the most favorable conditions. The assembly consists of a motor 18 provided with reduction unit and torque limiting device, the latter device providing for a timely stop of the accumulator in case of its possible overload. The assembly thus comprises a speed variator with V belt 19 and expanding pulley 20 with a ratio preferably ranging from 1:1 to 1:3 so as to adjust the mean linear speed (which normally is 28-30 metres/min) to the output of the packaging line into which the accumulator is being inserted, so that the speed will be regulated to a lower level for small containers and to a higher level for bigger containers.

In order to recover tension of belt 19, motor 18 is mounted in an adjustable position on the bracket 21 by means of a handwheel or other equivalent device (not shown). The expanding pulley 20 drives through bevel gears 22 the driving shaft 23, supported by a bearing 24 on the front beam 1, and then to the sprocket 25 driving the chain, whose tension is recovered by the tightening return sprocket 26 arranged at the opposite inlet end of the chain front straight length 15.

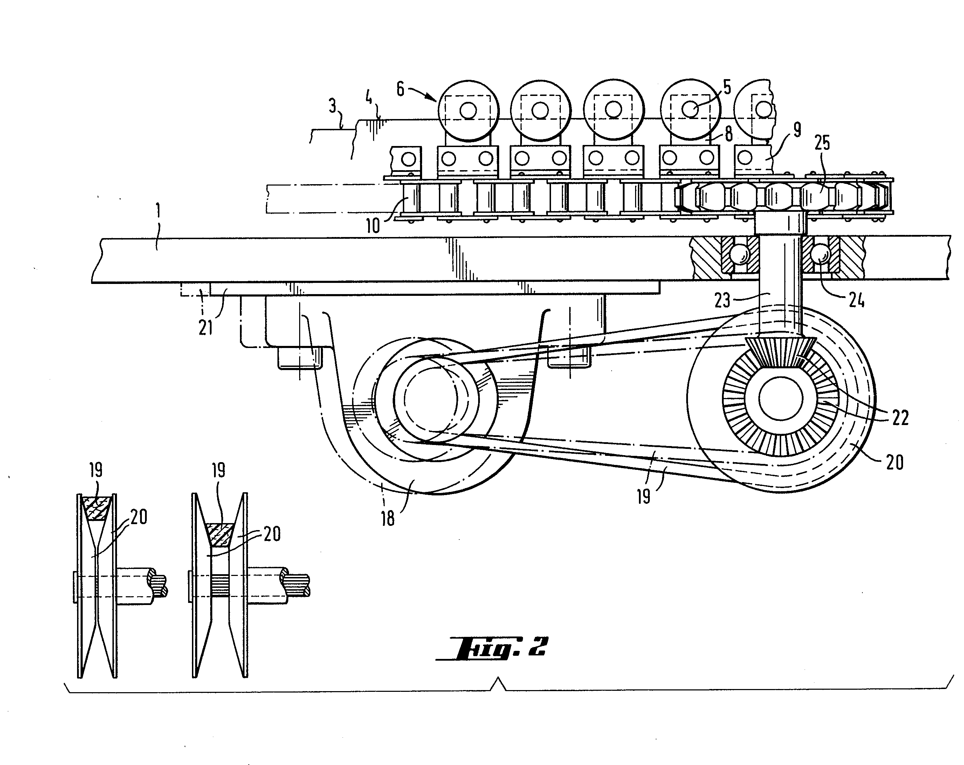

It has also to be noted that containers may be supported either on the rollers shown in Fig. 3 or on the rollers shown in Fig. 4 and 5; the kind of roller to be used depends upon the shape of the container handled by the packaging line. The embodiment shown in Fig. 3, with only one roller 6A unilaterally mounted on each pin and therefore on each link, is generally used for cylindrical containers which should rest on more

- 6 -

rollers, especially in the bends, because of their circular base; the embodiment shown in Figs. 4 and 5 is particularly useful for rectangular containers or containers with a non circular base, and is more balanced because all pin are bilateral end each pin has two symmetrical idle rollers 6B, one on each side. These twin pins however must be slightly beveled so as to not to interfere each other with sharp edges in the bends of the accumulator.

With the accumulator according to the present invention it is therefore possible to handle containers even of considerable weght, and to keep them intact, by way of example creating an accumulation store for the containers having a linear length of 24 meters or more with a surface area only of 287 x 170 cm, and it is clear that the room was rationally used at best. The above sizes are of course merely illustrative, as the extreme versatility of the accumulator according to the present invention is just one of its main features, allowing to fit it to very many types of packaging lines, both as arrangement of elements and sizes of containers to be handled, as well as linear length and advancement speed.

Moreover, although it is clear that for any element of the accumulator according to the present invention, the most suitable materials will be judiciously chosen for each particular solution, it is desired to mention as preferred materials, stainless steel for the pins, the plastic material available on the market under the T.M. DELRIN for the idle rollers and the synthetic material available on the market under the T.M. POLIZENE for the bands and the pin supporting guides.

Finally it is to be understood that several variations, modifications, additions, substitutions of elements may be resorted to the accumulator of the present invention, without departing however from its spirit and scope of protection, as it is better defined in the appended claims.

0096767

- 1 -

CLAIMS

1) Linear compensation accumulator for containers (C) handled in a packaging line, characterized by the fact of comprising a serpentine course where the containers (C) are supported and carried with a mechanical system (5, 6, 10) adapted to limit their friction load, and in a reduced room such an amount of containers is accomodated, as to form an accumulation store compensating any possible shutdown of the machine arranged downstream the packaging line.

2) Accumulator according to Claim 1, characterized by the fact that the mechanical system consists of a powered chain, each link (10) of which is provided with at least one idle roller (6), on which the containers (C) are supported.

3) Accumulator according to Claim 2, characterized by the fact that each chain link (10) is vertically arranged and is provided with a bracket (9) having a block (8) on which is fixed a pin (5), the idle roller or rollers (6) being mounted on said pin (5).

4) Accumulator according to Claim 2 or 3, characterized by the fact that the outer end of the pin (5) slides on a supporting guide (4) made of plastic material with a very low friction factor, said guide (4) defining the entire closed loop of the chain length.

5) Accumulator acording to Claim 1, characterized by the fact that the accumulator course is provided with an upper guide (11, 12) for the container bodies, connected to an oblique inlet member (16) and a corresponding outlet member (17) for the connection to the machines of the packaging line arranged upstream and downstream the accumulator, respectively.

6) Accumulator according to Claim 2, characterized by the fact that the motorization of chain consists of a motor assembly (18) provided with reduction unit and torque limiting device and a driving shaft (23) with driving sprocket (25) arranged at the outlet end of the accumulation course, while at the inlet end there is a return sprocket (26) recovering the chain tension.

7) Accumulator according to Claim 6, characterized by the fact that the motor (18) has a speed variation system consisting of a V belt (19) engaged in an expanding pulley (20) connected to the vertical driving shaft (23) through bevel gears (22), while the motor (18) is mounted in an adjustable position (21) to recover the belt tension.

8) Accumulator according to Claim 2 or 3, characterized by the fact that the pin (5) is made of stainless steel and bears a unilateral idle roller (6A) or two opposite idle rollers (6B) arranged on either side of the central chain (10).

9) Accumulator according to Claims 2, 3 and 4, characterized by the fact that the idle rollers (6) as well as the guide and support bands (4, 11, 12) are made of a suitable plastic material, and preferably the idle rollers (6) are made with the material sold under the T.M. DELRIN while the bands (4, 11, 12) are made with the material sold under the T.M. POLIZENE.

10) Linear compensation accumulator for containers such as phials, cans, bottles and the like, handled in a packaging line, substantially as hereinbefore described and as illustrated in the figures of the accompanying drawings, for the above mentioned objects.

**Fig. 1**

**Fig. 2**

*Fig. 3*

4/4

**Fig. 4**

**Fig. 5**